(19) Europäisches Patentamt
European Patent Office
Office européen des brevets

(11) **EP 2 298 367 A1**

(12) **EUROPEAN PATENT APPLICATION**

(43) Date of publication:
**23.03.2011 Bulletin 2011/12**

(21) Application number: **09011953.8**

(22) Date of filing: **18.09.2009**

(51) Int Cl.:
***A61L 31/10*** *(2006.01)* ***B01J 19/00*** *(2006.01)*
***B01L 3/00*** *(2006.01)* ***C08F 220/26*** *(2006.01)*
***C08F 220/34*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Max-Planck-Gesellschaft zur Förderung der Wissenschaften e.V.**
**80539 München (DE)**

(72) Inventors:
- **Ionov, Leonid**
  **01187 Dresden (DE)**
- **Diez, Stefan**
  **01277 Dresden (DE)**

(74) Representative: **Vossius & Partner**
**Siebertstrasse 4**
**81675 München (DE)**

# (54) Polymers for surface coatings

(57) The present invention relates to polymers combining positively charged moieties and poly(alkylene glycol) moieties which can be used in surface coatings to efficiently prevent biomolecules from adsorbing of on surfaces.

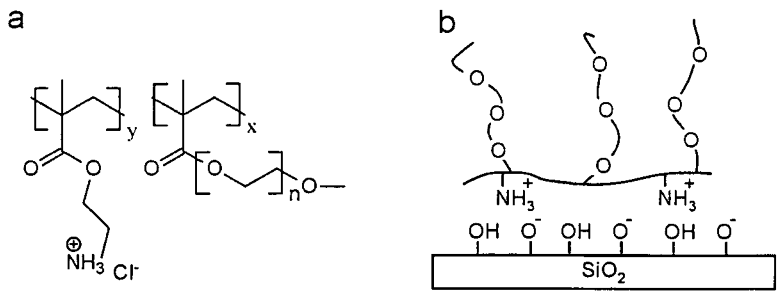

Fig. 1

EP 2 298 367 A1

Printed by Jouve, 75001 PARIS (FR)

## Description

The present invention relates to polymers combining positively charged moieties and poly(alkylene glycol) moieties which can be used to efficiently prevent biomolecules from adsorbing of on surfaces.

Reducing the non-specific adsorption of biomolecules, especially proteins, on surfaces is important for biomedical, bioanalytical, and bionanotechnological applications, as described e.g. in Suh, K. Y.; Seong, J.; Khademhosseini, A.; Laibinis, P.E.; Langer, R., Biomaterials 2004, 25, (3), 557-563 and Sofia, S. J.; Premnath, V.; Merrill, E. W., Macromolecules 1998, 31, (15), 5059-5070. Currently, poly(ethylene glycol) (PEG) based polymers with different architectures are widely used for this purpose. Methods to immobilize PEG on different substrates include grafting or adsorption of functionalized PEGylating agents and surface initiated polymerization. Otsuka, H; Nagasaki, Y.; Kataoka K., Current Opinion in Colloid & Interface Science 2001, 6, (1), 3-10 describe the construction of functionalized poly(ethylene glycol) (PEG) layers on surfaces for biomedical applications. Du, H.; Chandaroy, P.; Hui, S. W., Biochimica Et Biophysica Acta-Biomembranes 1997, 1326, (2), 236-248 report on grafted distearoyl-phosphatidylethanolamine (DSPE)-conjugated poly(ethylene glycol) (PEG) on lipid surfaces, which inhibits protein adsorption and cell adhesion. Zhang, F.; Kang, E. T.; Neoh, K. G.; Wang, P.; Tan, K. L., Biomaterials 2001, 22, (12), 1541-1548 relate to surface modification of stainless steel by grafting of poly(ethylene glycol) for reduction in protein adsorption. Among these methods, the ones which can be easily utilized in aqueous environment for lab-on-chip systems deserve particular interest. For example, graft copolymers of poly-L-lysine (PLL) with PEG side chains (PLL-PEG) were shown to adsorb from biological buffer solutions onto a variety of substrate materials including glass and metal-oxides. Huang, N. P.; Michel, R.; Voros, J.; Textor, M.; Hofer, R.; Rossi, A.; Elbert, D. L.; Hubbell, J. A.; Spencer, N. D., Langmuir 2001, 17, (2), 489-498 describe grafted poly (L-lysine)-grafted-poly(ethylene glycol) copolymers which chemisorb on anionic surfaces including metal oxide surfaces. The copolymer architecture shows cationic poly(L-lysine) attached electrostatically to the negatively charged oxide surfaces and the poly(ethylene oxide) side chains extending out from the surface. Thereby, the positively charged PLL backbone sticks to the negatively charged substrates, thus providing stability for the adsorbed layer and the PEG side chains stretch away from the surface, forming the protein-resistant layer. Furthermore, US 2008/0113352 Al discloses a method for electrochemically patterning a microelectrode array platform, providing the platform surface with an adsorbed layer of a protein-resistant poly(L-lysine)-grafted-poly(ethylene glycol)(PLL-g-PEG) polymer. US 2008/0199371 Al discloses a microfluidic device for patterned surface modification with protein-resistant poly(L-lysine)-grafted-poly(ethylene glycol)(PLL-g-PEG) polymer as blocking agent.

Despite the known applicability of PLL-PEG for providing protein resistant surfaces, a need remains for alternative polymers which provide advantages such as a convenient production at reasonable costs and simple applicability while efficiently preventing biomolecules from adsorbing to surfaces.

In accordance with the present invention, the above problems are solved by a polymer comprising

(a) a main chain comprising a poly((alkyl)acrylate) moiety (A),

(b) a plurality of identical or different side chains (B) bound to the poly((alkyl)acrylate) moiety (A), each side chain (B) comprising a cationic moiety; and

(c) a plurality of identical or different side chains (C) bound to the poly((alkyl)acrylate) moiety (A), each side chain (C) comprising a poly(alkylene glycol) moiety.

According to one specific embodiment, the polymer comprises a plurality of units of formula (B1) and a plurality of units of formula (C1),

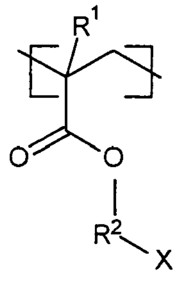

(B1)

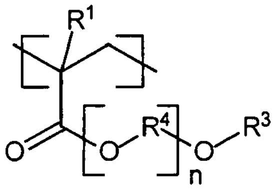

(C1)

wherein the variables $R^1$ to $R^4$, X and n have the following meanings independently for each occurrence in the polymer:

$R^1$ represents H or alkyl;
$R^2$ represents a hydrocarbon linking group having 1 to 20 carbon atoms which may contain one or more heteroatoms selected from O, S or N; X represents a cationic group;
$R^3$ represents a hydrocarbon group having 1 or 2 carbon atoms; $R^4$ represents alkyl; and n is an integer from 3 to 2000.

As a further embodiment, the invention provides a solid substrate which is fully or partially coated on at least one surface thereof with the polymer described above. Due to the presence of cationic groups, the polymer is particularly suitable for the coating of glass surfaces. It prevents in an efficient manner the adsorption of biomolecules, especially proteins, on coated surfaces.

Fig. 1 shows the characteristics of poly(ethylene glycol) methyl ether methacrylate and 2-aminoethyl methacrylate hydrochloride (AEM-PEG). Fig. 1a illustrates the chemical structure of AEM-PEG as an exemplary polymer, Fig. 1b represents schematically the adsorption of the polymer of the invention onto negatively charged surfaces.

Fig. 2 shows the surface adsorption of AEM-PEG to glass. Fig. 2a and 2b represent the thickness of different adsorbed AEM-PEG copolymers as function of the composition, Fig. 2c shows the calculated grafting density. Fig. 2d illustrates the distance between individual (AEM-bound) PEG chains.

Fig. 3 shows the zeta potential of glass surfaces with adsorbed AEM-PEG copolymers.

Fig. 4 shows the adsorption of fluorescent tubulin and microtubules on differently treated glass surfaces.

Fig. 5 shows the background fluorescence intensities of rhodamine-labeled tubulin adsorbed on glass substrates treated with different AEM-PEG copolymers.

Fig. 6 shows a patterned surface using AEM-PEG.

The main chain of the polymers according to the invention comprises a poly((alkyl)acrylate) moiety, i.e. a moiety which is formed by the polymerization of monomers containing an (alkyl)acrylate group. As will be understood, the polymerization of (alkyl)acrylate groups, typically a radical polymerization, converts the C-C double bond existing in the (alkyl)acrylate group to C-C bonds formed between the units provided by the former monomers in the polymer chain.
In accordance with established practice in the art, the term "main chain" refers to the polymer backbone, i.e. generally the chain having the highest number of consecutively bound atoms, in the polymer according to the invention. Preferably, the main chain of the polymer according to the invention is a chain consisting of carbon atoms, as it is obtained by the polymerization of monomers containing a C-C double bond. The term "unit" refers to a unit within a polymer chain which is obtained from the polymerization of one monomer, preferably one monomer containing an (alkyl)acrylate group.
The term "(alkyl)acrylate" indicates, in accordance with the common meaning of the term in the art, that the alkyl group may be present or absent as a substituent. Thus, the (alkyl)acrylate group may be represented by the formula (1)

$$-OC(O)-CR^1=CH_2 \qquad (1),$$

wherein $R^1$ represents H or alkyl. In the context of the present invention, $R^1$ is typically selected from H or $C_{(1-4)}$alkyl. Preferably it is selected from H or methyl, i.e. the polymer main chain of this preferred embodiment comprise a poly((meth) acrylate) moiety. Further preference is given to polymers wherein $R^1$ is methyl, i.e. polymers comprising a poly(methacrylate) moiety.
The polymers according to the invention contain typically contain in their main chain 50 % or more, preferably

70 % or more of units obtained by the polymerization of monomers containing an (alkyl)acrylate group as defined above (with the percentage given in terms of the number of the respective units in relation to the total number of polymerized units contained in the main chain of the polymer). Frequently, the polymer main chain essentially consist of units derived from the polymerization of monomers containing an (alkyl)acrylate group, i.e. these latter monomers account for 95 % or more or even 100 % of all polymer units in the main chain.

However, as long as the characteristics of the polymers according to the invention still allow the purpose of the invention to be achieved, the polymers according to the invention may comprise in their main chain units derived from comonomers other than those containing an (alkyl)acrylate group, e.g. other monomers containing a polymerizable vinyl group such as styrene, dienes, etc. Typically, such monomers account for less than 50 %, preferably less than 30 % of all units polymerized in the polymer main chain according to the invention (with the percentage given in terms of the number of the respective units in relation to the total number of polymerized units contained in the main chain of the polymer).

The polymer according to the invention comprises a plurality of side chains (B) bound to the poly((alkyl)acrylate) moiety which contain a cationic moiety. Cationic moieties in different side chains can be identical or different, but in terms of the production of the polymer, it may be convenient to use a single type of cationic moiety for the whole polymer. A single side chain (B) may comprise one or more cationic moieties, typically there is one per side chain.

Exemplary cationic moieties which can be used in the repeating units (B1) are ammonium groups, or phosphonium groups, such as those represented by the following formulae (2) and (3). Ammonium moieties, in particular those of formula (2), are especially preferred.

$$-N^+(R^5)(R^6)(R^7) \qquad (2)$$

$$-P^+(R^5)(R^6)(R^7) \qquad (3)$$

In these formulae $R^5$ and $R^6$ are independently selected from hydrogen or alkyl, and $R^7$ is independently selected from hydrogen, alkyl, phenyl or benzyl. Furthermore, in formula (2), two of the groups $R^5$ to $R^7$ may combine to form a 5 to 7-membered aromatic or non-aromatic heterocyclic ring together with the nitrogen atom to which they are attached, such as pyridine, morpholine, piperidine, or pyrimidine. Preferred as $R^5$ to $R^7$ are hydrogen and $C_{1-6}$ alkyl, and it is especially preferred that at least one of $R^5$ to $R^7$ is hydrogen, the other ones being selected from hydrogen or $C_{1-6}$ alkyl, e.g. methyl or ethyl. Most preferred as cationic moieties are groups of formula (2) wherein $R^5$ to $R^7$ are all hydrogen.

As exemplary anionic counter ions which may be used singly or in combination to balance the cationic charge (s) in the side chains (B) of the polymer according to the invention, reference can be made to halogenides, such as chloride, bromide, iodide, fluoride, borate, tetrafluoroborate, perchlorate, nitrate, sulfate, hydrogensulfate, tosylate, acetate, alkylsulfate, trifluoromethylsulfate or benzenesulfate anions. Preferred are inorganic ions such as the halogenides, nitrate or sulfate.

As will be understood from the explanations provided herein with respect to the polymers according to the invention, it is preferred that the polymer does not contain any anionic moiety covalently bound within the polymer chain, including both the main chain and the side chains. The anionic counter ions mentioned above generally form ionic bonds with the cationic cationic moieties comprised in the side chains (B).

In addition to the cationic moiety, the side chains (B) typically comprise a linking group which binds the cationic moiety or moieties to the poly((alkyl)acrylate) moiety of the polymer according to the invention. Suitable linking groups may be chosen from a variety of structures fulfilling this function. It is generally convenient to select a linking group which forms an ester bond with the carboxylic acid groups provided by the poly((alkyl)acrylate) moiety in the main chain. Typically, the cationic moiety is bound to the poly((alkyl)acrylate) moiety by a hydrocarbon linking group having 1 to 20 carbon atoms which may contain one or more heteroatoms selected from O, S or N and which is covalently bound via an ester bond to the carboxylic acid groups provided by the poly((alkyl)acrylate) main chain. Generally preferred are hydrocarbon groups with 1 to 6 carbon atoms. Examples of suitable hydrocarbon groups are alkyl groups, aryl groups or groups combining alkyl and aryl moieties. Preferred are alkyl groups, and particularly preferred are $C_{1-4}$ alkyl groups, such as methyl or ethyl, especially ethyl. Divalent linking groups can be used to bind one cationic moiety, but higher valent linking groups can also be suitable, depending on the desired number of cationic moieties per side chain.

Preferably, the polymer according to the invention comprises units of the formula (B1) to provide units of the poly((alkyl)acrylate) moiety and the side chains (B):

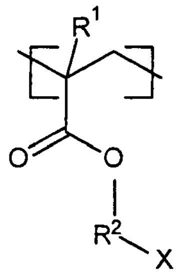

(B1)

In formula (B1), the variables have the following meanings independently for each occurrence of the respective unit in the polymer:

$R^1$ represents H or alkyl;
$R^2$ represents a hydrocarbon linking group having 1 to 20 carbon atoms which may contain one or more heteroatoms selected from O, S or N;
and X represents a cationic group.

In formula (B1), the brackets [ ] indicate, in accordance with established practice in the art, a unit which are present in a polymer chain and which is bound to further units of the polymer with the bonds schematically shown as extending past the brackets.

$R^1$ is preferably H or $C_{1-6}$ alkyl, more preferably H or methyl and particularly preferred is methyl.

Examples of suitable hydrocarbon groups are alkyl groups, aryl groups or groups combining alkyl and aryl moieties. Generally preferred as $R^2$ is a hydrocarbon group with 1 to 6 carbon atoms, such as phenylene or alkylene. Particularly preferred are $C_{1-4}$ alkylene groups, such as methylene or ethylene, especially ethylene.

Exemplary cationic groups X which can be used in the repeating units (B1) are ammonium groups, or phosphonium groups, such as those represented by the following formulae (2) and (3) as defined above. Ammonium moieties, in particular those of formula (2), are especially preferred. In these formulae $R^5$, $R^6$ and $R^7$ are independently selected from hydrogen or alkyl, and $R^7$ may further be a phenyl or benzyl group. Furthermore, in formula (2), two of the groups $R^5$ to $R^7$ may combine to form a 5 to 7-membered aromatic or non-aromatic heterocyclic ring together with the nitrogen atom to which they are attached, such as pyridine, morpholine, piperidine, or pyrimidine. Preferred as $R^5$ to $R^7$ are hydrogen and $C_{1-6}$ alkyl, and it is especially preferred that at least one of $R^5$ to $R^7$ is hydrogen, the other ones being selected from hydrogen or $C_{1-6}$ alkyl, e.g. methyl or ethyl. Most preferred as cationic moieties are groups of formula (2) wherein $R^5$ to $R^7$ are all hydrogen.

A preferred type of monomers which can be suitably polymerized to form units (B1) of the polymer according to the invention are aminoalkyl methacrylate monomers, such as 2-aminoethyl methacrylate. The amino group can be protonated to form a cationic group either before or after polymerization using any organic or inorganic acid. For example, the aminoalkyl methacrylate monomers may be polymerized in the form of a hydrochloride or hydrobromide salt.

As set out above, the polymer according to the invention further comprises a plurality of side chains (C) bound to the poly((alkyl)acrylate) moiety which contain a poly(alkylene glycol) moiety. A single side chain (C) may comprise one or more poly(alkylene glycol) moieties, typically there one is contained per side chain. Typically, the poly(alkylene glycol) moieties in the side chains (C) can be represented by the following formula (4):

$$-[O\text{-}R^4]_n- \qquad (4)$$

In the formula, $R^4$ indicates an alkylene group and n indicates the number of repeating units.

The poly(alkylene glycol) moieties is preferably poly(ethylene glycol), or a mixed poly(alkylene glycol) containing ethylene glycol moieties, such as polyethylene glycol (PEG)/polypropylene glycol (PPG) copolymer moieties. Most preferably, $R^4$ is ethylene such that the polymer according to the invention comprises polyethylene glycol moieties in the side chains (C).

Preferred poly(alkylene glycol) moieties have a number of alkylene glycol repeating units n of 3 or more, especially 5 or more and more preferably 10 or more or 25 or more and 2000 or less, particularly 1000 or less, preferably 300 or less and most preferably 100 or less.

The poly(alkylene glycol) moieties can be directly bound to the poly((alkyl)acrylate) moiety via an ester bond formed between a terminal -OH group of the poly(alkylene glycol) and a carboxyl group of the poly((alkyl)acrylate) moiety. Alternatively, the side chain (C) may comprise a linking group between the poly(alkylene glycol) moiety and the poly((alkyl)acrylate) moiety. The linking group may be a hydrocarbon linking group having 1 to 20 carbon atoms which may contain one or more heteroatoms selected from O, S or N and which forms an ester bond with the carboxylic acid groups provided by the poly((alkyl)acrylate) main chain and an ester or ether bond with a terminal -OH group of the poly(alkylene glycol. Generally preferred are hydrocarbon groups with 1 to 6 carbon atoms. Examples of suitable hydrocarbon groups are alkyl groups, aryl groups or groups combining alkyl and aryl moieties. Preferred are alkyl groups, and particularly preferred are $C_{1-4}$ alkyl groups, such as methyl or ethyl, especially ethyl. However, in terms of a convenient synthesis of the polymer according to the invention, a direct ester bond between the poly((alkyl)acrylate) moiety and the poly(alkylene glycol) moiety is preferred.

The side chains (C) may further comprise an end group bound to the poly(alkylene glycol) moiety at an end which is in distal position from the poly((alkyl)acrylate) moiety. This end group may be used to introduce further functionalities, but may also be a capping group known in the art for poly(alkylene glycol) moieties. For this latter purpose, hydrocarbon groups having 1 to 20 carbon atoms may be conveniently used which are linked to the poly(alkylene glycol) moieties via an ether bond. Specifically, phenyl groups or $C_{1-6}$ alkyl groups, such as methyl or ethyl groups, are frequently used.

Preferably, the polymer according to the invention comprises units of the formula (C1) to provide units of the poly((alkyl)acrylate) moiety and the side chains (C):

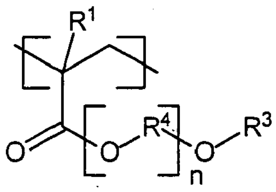

(C1)

In formula (C1), the variables have the following meanings independently for each occurrence of the respective unit in the polymer:

$R^1$ represents H or alkyl;
$R^3$ represents H or a hydrocarbon group having 1 to 20 carbon atoms; $R^4$ represents alkylene; and n is an integer from 3 to 2000.

In formula (C1), the brackets [ ] indicate, in accordance with established practice in the art, a unit which are present in a polymer chain and which is bound to further units of the polymer with the bonds schematically shown as extending past the brackets. The brackets including the index $[\ ]_n$ indicates, in accordance with established practice in the art, that the respective repetitive unit inside the brackets is present n-times in the molecule.

$R^1$ is preferably H or $C_{1-6}$ alkyl, more preferably H or methyl and particularly preferred is methyl.

Preferred examples of $R^3$ are hydrocarbon groups selected from alkyl groups, aryl groups or groups combining alkyl and aryl moieties. Generally preferred as $R^3$ is a hydrocarbon group with 1 to 6 carbon atoms, such as a alkyl or phenyl group. Particularly preferred are $C_{1-4}$ alkyl groups, such as methyl or ethyl.

The definition of $R^4$ complies with the one given above for $R^4$ in the side chains (C). Preferably, $R^4$ is selected from ethylene or mixtures of ethylene and propylene, and more preferably it is ethylene.

A preferred lower limit for n is 5, more preferred is 10 and most preferred is 20. A preferred upper limit is 1000, especially 300, more preferred 100 and most preferred 70.

A preferred type of monomers which can be suitably polymerized to form units (C1) of the polymer according to the invention are poly(ethylene glycol) alkyl ether methacrylate monomers, such as poly(ethylene glycol) methyl ether methacrylate, with an average molecular weight of the poly(ethylene glycol) (PEG) side chains ranging from 400 to 9000, preferably from 1000 to 3000 g/mol.

As noted above, the polymers according to the invention contain typically contain in their main chain 50 % or more, preferably 70 % or more, and particularly 95 % or more of units derived from the polymerization of monomers containing an (alkyl)acrylate group, or even essentially consists of units derived from the polymerization of monomers containing an (alkyl)acrylate group. It is further preferred that a major part of these units derived from the polymerization of monomers containing an (alkyl)acrylate group, i.e. 50 % or more, preferably 70 % or more, more preferably 95 % or more (in terms of the number of the respective units in relation to the total number of units contained in the main chain of the polymer according to the invention), comprise either a side chain (B) comprising a cationic moiety as defined above, or a side chain (C) comprising a poly(alkylene glycol) moiety as defined above, or that the polymer essentially

consists of units comprising either one of these side chains.

Thus, in a preferred embodiment, a major part of the units forming the polymer according to the invention, i.e. 50 % or more, preferably 70 % or more and particularly 95 % or more (in terms of the number of the respective units in relation to the total number of units contained in the main chain of the polymer according to the invention), are units of the formula (B1) or (C1). In a particularly preferred embodiment, the polymer according to the invention essentially consists of units (B1) and (C1) as defined above.

The polymers according to the invention typically have an average degree of polymerization of 100 to 10000, preferably 500 to 5000. In this context, the degree of polymerization indicates the number of polymerized units comprised in the main chain of the polymer.

It has been found that surprisingly stable coatings can be obtained with polymers of the present invention which contain a relatively small amount of side chains (B) comprising a cationic moiety. On the other hand, large amounts of side chains containing a cationic moiety may lead to the gelation of the polymers according to the invention in aqueous solutions, which may be inconvenient for the coating of the polymer onto a surface. Thus, it is preferred that the ratio of polymer units containing a side chain (B), or the ratio of the preferred units (B1), in the polymer according to the invention, is 0.01 % or more, more preferably 0.1 % or more and even more preferably 1 % or more (in terms of the number of the respective units in relation to the total number of units contained in the main chain of the polymer according to the invention). On the other hand, it is preferably not more than 25 %, more preferably not more than 15 %, and especially not more than 10 % (in terms of the number of the respective units in relation to the total number of units contained in the main chain of the polymer according to the invention).

The total number of cationic moieties in the polymers according to the invention is preferably lower than the total number of poly(alkylene) moieties. Thus, the ratio of the number of cationic moieties to the number of poly(alkylene glycol) moieties in the polymer according to the invention is often 1:2 or lower, preferably 1:5 or lower, and even more preferably 1:10 or lower. In order to allow a sufficient binding with the surface, the ratio is generally 1:250 or higher, preferably 1:100 or higher and more preferably 1:50 or higher.

In view of the above, it is particularly preferred to copolymerize (alkyl)acrylate monomers yielding, upon polymerization of their (alkyl)acrylate group, polymer units (B1), and (alkyl)acrylate monomers yielding, upon polymerization of their (alkyl)acrylate group, polymer units (C1), in molar ratios of 1:5 to 1:100, more preferably 1:10 to 1:50. Moreover, it is further preferred that the polymer according to the invention comprises no other polymerized comonomers apart from those yielding (B1) and (C1). Additionally, it is even further preferred that the group $R^4$ in the polymer units (C1) represents ethyl and that the average molecular weight of the PEG side chains provided by the units (C1) ranges from 1000 to 3000 g/mol.

As far as preferred polymers comprising (or more preferably essentially consisting of) units (B1) and (C1) as defined above are concerned, particularly advantageous polymers can also be defined via the weight ratio of the total weight of monomers polymerized to provide the units (B1) in the polymer and the total weight of the monomers used to provide the units (C1). The respective weight ratio is calculated on the basis of the total weight of the respective monomer reactants charged in the polymerization reaction, i.e. typically the weight ratio of the following monomers (B2) and (C2) wherein $R^1$ to $R^4$ and X, including preferred embodiments, are defined as above for the units (B1) and (C1). In the case of the monomers providing units (B1), the total weight of the monomers includes the weight of the anions required to balance the charge of the cationic group X.

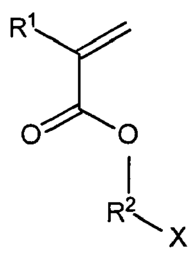

(B2)

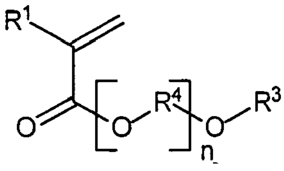

(C2)

The weight ratios of the respective monomers in preferred polymers range from 0.1:99.9 to 10:90, more preferably from 1:99 to 5:95.

The polymers according to the invention may be produced via standard procedures known in the art, particularly via free radical polymerization using one or more radical initiators, such as azo-compounds. Conveniently, the polymers according to the invention can be obtained as random copolymers from mixtures of suitable monomers. In view of the fact that monomers with charged/polar groups can be used, the polymers can be obtained via polymerization in aqueous solutions of the monomers, i.e. solutions containing 50 % (v/v) or more of water. However, the invention is not restricted to these methods and also includes other standard forms of polymerization with or without polymerization media, as well as other types of solutions including various types of suitable organic solvents which can be easily chosen by the skilled person.

Various general strategies of synthesis may be employed in order to provide the polymers according to the invention. For example, the polymers may be obtained via polymerization of (alkyl)acrylic acid, optionally together with further monomers, and subsequent functionalization of carboxylic acid groups to yield side chains (B) and (C). Similarly, this goal may be achieved via polymerization of monomers containing (alkyl)acrylate groups, but do not contain the required side chains (B) and (C), optionally together with further monomers, and a subsequent transesterification reaction to introduce the side chains (B) and (C). However, it is generally most convenient to copolymerize monomers containing (alkyl)acrylate groups and side chains (B) with monomers containing (alkyl)acrylate groups and side chains (C), optionally together with further monomers.

Furthermore, as mentioned above, it is of course possible to polymerize monomers which contain precursor forms of the side chains (B) or (C) and convert these precursor forms after polymerization. One possibility in this respect would be the conversion of neutral amino groups in a polymer into their salt form under the influence of a proton donation acid or an alkylating agent after polymerization to obtain the side chains (B). However, in view of their water solubility, it is generally advantageous to use monomers which already contain a cationic group such that an aqueous solution polymerization can be easily carried out.

As noted above, the polymers according to the invention can be suitably used as or in coatings which impart resistance against adsorption of biomolecules, in particular proteins, to a surface. For example, polymers according to the invention effectively block globular proteins (tubulin), their assemblies (microtubules) and functional motor proteins (kinesin-1) from adsorbing to surfaces, in particular glass surfaces.

The polymers can be conveniently coated onto surfaces, in particular surfaces which carry anionic charges or groups which may be ionized under appropriate conditions to yield a negative charge. Such surfaces will readily interact with the cationic groups contained in the polymer according to the invention. This interaction will result in a stable coating of the surface by the polymer according to the invention. Examples of such surfaces are inorganic oxides, i.e. materials which contain an oxidic network superficially endowed with $-O^-$ groups. Particularly suitable are glass surfaces. On these surfaces, end groups of a silica network provide these negative charges (cf. Fig. 1b).

The polymers according to the invention can be coated on any solid substrates which have at least one suitable surface. The surface can be coated fully or partially with the polymer according to the invention or with mixtures of various polymers according to the invention. The coated surface can be planar, but may also provide other geometries.

Substrates of interest which can be advantageously coated by a polymer according to the invention include bioanalytical devices and microarrays, such as bioanalytical chips or wafers as they are used in various types of assays, but also vessels for storing and transporting samples especially in liquid form. Further included are microfluidic devices, i.e. systems for manipulating small volumes of fluids. Here, the polymers according to the invention can be used for surface structuring of such devices.

The thickness of the coating, as it may be measured for example via ellipsometric methods, generally ranges from 0,1 to 100 nm. Preferably, it is 0.5 nm or higher, more preferably 1 nm or higher. On the other hand, it is frequently below 10 nm.. It has been found that the thickness of the coating can be suitably adjusted by varying the ratio of the units having a side chain (B), or of the preferred units (B1). Thus, the incorporation of small, increasing amounts of such units results in a sharp increase of the thickness of a coated film obtainable by applying a solution of the polymer to a surface, followed by removal of the solvent. Maximum thicknesses of the polymer coating are generally achieved for ratios of about 0.5 to 10 % (in terms of the number of units having a side chain (B), or of the preferred units (B1), in

relation to the total number of units contained in the main chain of the polymer according to the invention). With further increasing ratios of the respective units, a decrease of the thickness of the polymer coating is often observed.

Various methods can be used to coat a surface with the polymer according to the invention. For example, coatings can be preformed in the form of thin films to be applied to surfaces, but it is most convenient to apply solutions of the polymer according to the invention onto the surface to be coated, followed by removal of the solvent, e.g. via evaporation. The polymers according to the invention are characterized by an advantageous solubility in water, such that they can be applied in the form of aqueous solutions, i.e. solutions containing 50 % or more, preferably 70 % or more (v/v) of water as solvent or which use, in the most preferred form, water as the only solvent.

Solutions containing the polymers according to the invention can be applied to surfaces via conventional methods such as spraying, dipping, bar coating, roller coating or spin coating. They may also be applied in patterned form e.g. via brushes, pens, plotting or stamping techniques, which allows a structuring of surfaces into predefined coated and non-coated areas.

## Examples

### Chemicals

The following chemicals were used as received from the supplier:

2-aminoethyl methacrylate hydrochloride (AEM, Aldrich),
2,2"-azobis(2-methylpropionitrile) (AIBN, Fluka),
*N*,*N*-dimethylformamide (DMF, Fluka),
PLL(20)-g(3.2)-PEG(5) (Surface solutions, batch SZ24-3, 20.6.2005),
2-[methoxy(polyethyleneoxy)propyl]trimethoxysilane (ABCR)

The poly(ethylene glycol) methyl ether methacrylate, $M_n$ = 475 (PEG475, Aldrich) and poly(ethylene glycol) methyl ether methacrylate 50% water solution, $M_n$ = 2080 (PEG2K, Aldrich) were purified by passing through $Al_2O_3$ column.

## Preparation Examples

### Synthesis of AEM-PEG copolvmers

1g of poly(ethylene glycol) methyl ether methacrylate with different molecular weights, variable amount of 2-aminoethyl methacrylate hydrochloride and 2mg of AIBN were dissolved in 5ml of water/DMF 1:1 mixture. Polymerization was performed under nitrogen atmosphere for 24 hrs. The resulting polymer solution was diluted to a concentration of 1 mg/ml and used for further experiments. Obtained polymers were defined as AEM$\alpha$-PEG$\beta$, where $\alpha$ is the mass of AEM in milligrams per gram of the PEG containing monomer used for the synthesis and $\beta$ is the molecular weight of the PEG side chains in g/mol.

### Synthesis of AEM6.5-PEG2K

AEM6.5- PEG2K was prepared using 1g of poly(ethylene glycol) methyl ether methacrylate (Mn = 2080 g/mol) and 6.5 mg of 2-aminoethyl methacrylate hydrochloride according to the above described method.

### Fabrication of silane-PEG substrates for comparative tests

Piranha-cleaned glass substrates were incubated in 2.3 mg/ml toluene solution of 2-[methoxy(polyethyleneoxy) propyl]trimethoxysilane for 18h. The substrates were rinsed several times in toluene, ethanol and pure water.

### Ellipsometry

The thickness of the polymer layers was measured at $\lambda$ = 633 nm and an angle of incidence of 70° (in dry state) and of 68° (in specially designed cell for *in-situ* measurements) with a nullellipsometer (Multiscope, Optrel Berlin) as described in Ionov, L.; Zdyrko, B.; Sidorenko, A.; Minko, S.; Klep, V.; Luzinov, I.; Stamm, M.; Macromolecular Rapid Communications 2004, 25, (1), 360-365 and Ionov, L.; Sidorenko, A.; Eichhorn, K. J.; Stamm, M.; Minko, S.; Hinrichs, K.; Langmuir 2005, 21, (19), 8711-8716.

The density of PEG-side chains in the polymer layer adsorbed on the glass ($T_{PEG}$) and the distance between

individual PEG chains on the surface (D) were calculated using equations (1) and (2), respectively:

$$\Gamma_{PEG}\left(mg/m^2\right) = H \cdot \rho \cdot (1-\varphi_{AEM}^{mass})$$

(1)

$$D(nm^{-1}) = \sqrt{\frac{M_{PEG}}{\Gamma_{PEG} \cdot N_A}}$$

(2)

where H is the dry thickness of the adsorbed polymer layer, ρ is the bulk mass density of polymer, is the mass fraction of AEM, $M_{PEG}$ is the molecular weight of PEG, $N_A$ is Avogadro number.

Fluorescence microscopy

Fluorescence images were obtained using an Axiovert 200M inverted microscope with a 20× objective (Zeiss, Oberkochen, Germany) equipped with a FluoArc lamp. For data acquisition a standard TRITC filterset (excitation: HQ 535/50; dichroic: Q 565 LP; emission: HQ 610/75, Chroma Technology) in conjunction with a Micromax 512 BFT camera (Photometrics, Tucson, AZ) and a MetaMorph imaging system (Universal Imaging, Downingtown, PA) were used.

Electro-kinetic measurements

The streaming potential measurements were carried out with the Electrokinetic Analyzer (EKA) by Anton Paar GmbH, Graz, Austria using a special rectangular cell (developed and constructed at the Leibniz Institute of Polymer Research, Dresden, Germany) for small flat pieces. Details of the measuring technique and the used device are reported in Jacobasch, H.-J.; Simon, F.; Werner, C.; Bellmann, C.; Techn. Mess. 1996, 63, 447 and Bellmann, C.; Synytska, A.; Caspari, A.; Drechsler, A.; Grundke, K.; Journal of Colloid and Interface Science 2007, 309, (2), 225-230. The zeta potential was calculated according to Smoluchowski, M.; Handbuch der Elektrizität und des Magnetismus, Band II. Barth-Verlag: Leipzig, 1921.

Adsorption of polymers

Glass cover slips or silica wafers were cleaned in piranha solution ($H_2SO_4$ and $H_2O_2$ 2:1) at 70°C for 40 min and were used as substrates. Narrow channels (3mm x 18mm x 0.1 mm) were fabricated between the cleaned glass coverslips and formed the flow cells for further experiments. The channel was filled with AEM-PEG copolymers solution (1 mg/ml in pure water). After about 10 min the channel was rinsed with BRB80 (80 mM PIPES/KOH pH=6.9, 1 mM EGTA, 1 mM $MgCl_2$) buffer.

Two series of AEM-PEG copolymers with different lengths of the PEG side chains (Fig. 1a) were synthesized as explained in detail above, using free radical polymerization. The obtained copolymers were denominated as AEMα-PEGβ, where α is the mass of AEM in milligrams per gram of PEG monomer used for synthesis and β is the molecular weight of the PEG (in g/mol). The degree of polymerization varied between 600 - 1000 monomer units. The obtained polymers were all water soluble.

The adsorption of AEM-PEG copolymers on negatively charged glass surfaces ($IEP_{GLASS}$ = 2, was studied (Figure 2). It was found that the thickness of the adsorbed polymer layers as function of the composition exhibited a peak-like character (Figure 2a and b shows two different representations of the thickness of adsorbed AEMα-PEG2080 and AEMα-PEG475 copolymers as function of their composition.). The incorporation of small amounts of positively charged AEM groups in the polymer chains first resulted in a sharp increase of the polymer adsorption. This behavior indicates that a minimum number of positively charged groups per chain is sufficient for sustained polymer adsorption to the surface. At larger AEM amounts the layer thickness decreased non-linearly, presumably due to the lower number of PEG side-chains per polymer molecule, such that large amounts of AEM are generally not needed. Generally, particularly preferred results could be obtained for a mass ratio AEM:PEG ranging from 1:99 to 5:95) The grafting density and the distances between individual (AEM-bound) PEG chains on the surface were calculated as specified above (Figures 2c and 2d). For comparison, the thickness (dashed lines in a and b) and the grafting density (dashed line in c) of adsorbed PLL(20)-g(3.2)-PEG(5) layers are plotted in Figure 2. Moreover, the gyration radii of PEG with molecular weights of 500 g/mol and 2000 g/mol in water (lines in d) are given for reference.

Zeta potential measurements proved the substrate shielding by the adsorbed polymers (cf. Figure 3. Zeta potential of glass surfaces with adsorbed AEM-PEG copolymers at pH = 5 and 1mM KCl). While the glass substrate was strongly negatively charged (ζ = -60 mV at pH = 5), the adsorbed AEM-PEG polymers reduced the negative charge. The most pronounced reduction in surface charge was observed for AEM3.2-PEG2080 and AEM230-PEG475. In these cases, the glass substrates were almost uncharged.

Protein adsorption

*Adsorption of microtubules and tubulin*

Taxol-stabilized, rhodamine-labeled microtubules (~30 nM tubulin, 1 mM ATP, 1 mM $MgCl_2$, 10 μM taxol, and oxygen scavenger mix; all in BRB80 buffer) were prepared as described in Ionov, L.; Stamm, M.; Diez, S.; Nano Letters 2005, 5, (10), 1910-1914. Unpolymerized tubulin was not removed. The substrates were exposed to the microtubule/tubulin solutions for 5 min. Afterwards, not-adsorbed microtubules and tubulin were removed by rinsing with BRB80 (containing 10 μM Taxol).

*Microtubule motility experiments*

Motility experiments were performed in flow channels with adsorbed polymers. A casein-containing solution (0.5 mg/ml in BRB80) was perfused into the flow cell and allowed to adsorb to the surfaces for 5 min. Next, 50 ml of a motor solution containing 2 μg/ml wild-type kinesin-1 in BRB80 (full length drosophila conventional kinesin expressed in bacteria and purified as described in Coy, D. L.; Wagenbach, M.; Howard, J.; Journal of Biological Chemistry 1999, 274, (6), 3667-3671) was perfused into the flow cell and allowed to adsorb for 5 min. Thereafter, a motility solution containing rhodamine-labeld taxol-stabilized microtubules (as described in Ionov, L.; Stamm, M.; Diez, S.; Nano Letters 2005, 5, (10), 1910-1914 and Ionov, L.; Stamm, M.; Diez, S.; Nano Letters 2006, 6, (9), 1982-1987) was applied.

The adsorption of fluorescently-labeled proteins to AEM-PEG coated surfaces was tested on the examples of tubulin (globular protein with a size of about 5 nm) and *in vitro* reconstructed microtubules (protein assemblies with a diameter of about 25 nm and lengths of several tens of μm) (Figures 4 and 5). In addition, the binding of unlabeled kinesin-1 motor proteins, which presence on the surface was probed in microtubule gliding assays was investigated (Figure 6). When applying a solution containing rhodamine-labeled microtubules and unpolymerized rhodamine-labeled tubulin to glass surfaces treated with AEM6.5-PEG2080 (Figure 4a) and AEM3.2-PEG2080 (Figure 4b) very low protein binding was observed in comparison with a glass surface treated with silane-PEG (Figure 4c). Surprisingly, it was found that PLL(20)-g(3.2)-PEG(5) was rather inefficient in surface blocking (Figure 4d), comparable to untreated (piranha-cleaned) surfaces without polymers (Figure 4e). On those samples, microtubules were not prevented from binding to the surface and a significantly increased fluorescent background signal originating from unpolymerized tubulin was observed.

Specifically, Figure 4 shows the Adsorption of fluorescent tubulin and microtubules on differently treated glass surfaces: (a) AEM6.5-PEG2080, (b) AEM3.2-PEG2080, (c) silane-PEG, (d) PLL(20)-g(3.2)-PEG(5), and (e) Piranha-cleaned glass without polymers. The surfaces were incubated with the protein solutions for 5 minutes and carefully rinsed with unfluorescent buffer solution before imaging. Intensity profiles along the dashed lines in the fluorescence micrographs (scale bar 50 μm) are given below the images. The bright spots in the images a, b and c are microtubules floating freely in solution.

Figure 5 shows the background fluorescence intensities of rhodamine-labeled tubulin adsorbed on glass substrates treated with different AEM-PEG copolymers (evaluated from images as exemplarily shown in Figure 4). Intensity values on piranha-cleaned, as well as silane-PEG and PLL(20)-g(3.2)-PEG(5)-coated glass surfaces are given for reference.

To further demonstrate the efficiency of surface blocking, kinesin-1 motor proteins (Howard, J. Nature 1997, 389, (6651), 561-567) were adsorbed on different PEG-modified surfaces and the gliding motility of microtubules (Katira, P.; Agarwal, A.; Fischer, T.; Chen, H. Y.; Jiang, X.; Lahann, J.; Hess, H. Advanced Materials 2007, 19, (20), 3171) was assayed. It was found that microtubules: (i) were gliding (with normal speed of 800 nm/s) on untreated glass surfaces without polymers, (ii) got stuck immotile on PLL-PEG-coated glass surfaces and (iii) did not bind at all to glass surfaces coated with AEM6.5-PEG2080, AEM3.2-PEG2080 and silane-PEG coated glasses. These experiments confirmed the high efficiency of the synthesized AEM-PEG polymers to prevent protein adsorption.

Surface patterning

Finally, the applicability AEM-PEG copolymers for surface structuring in microfluidic devices was tested. In a flow cell formed between two glass coverslips, half of the channel was filled with a AEM6.5-PEG2080 solution. After incubation for 10 min, the solution was removed and replaced by a motility solution containing kinesin-1 motor protein. In microtubule motility assays we then observed a well-defined border between the untreated and the formerly polymer-covered areas. As shown in Figure 6, rhodamine-labeled microtubules were gliding on the areas formerly not-covered by AEM-PEG while no motility was observed on the areas with adsorbed polymer.

## Claims

1. Polymer comprising

   (a) a main chain comprising a poly((alkyl)acrylate) moiety,
   (b) a plurality of identical or different side chains (B) bound to the poly((alkyl)acrylate) moiety, each side chain (B) comprising a cationic moiety; and
   (c) a plurality of identical or different side chains (C) bound to the poly((alkyl)acrylate) moiety, each side chain (C) comprising a poly(alkylene glycol) moiety.

2. Polymer according to claim 1, wherein the poly((alkyl)acrylate) moiety is a poly(methacrylate) moiety.

3. Polymer according to claim 1 or 2, wherein the side chains (B) and the side chains (C) are bound to the main chain via ether or amide bonds formed with carboxylic acid groups of the poly((alkyl)acrylate) moiety.

4. Polymer according to any of claims 1 to 3, wherein the cationic moieties in the side chains (B) comprise ammonium groups.

5. Polymer according to claim any of claims 1 to 4, wherein the poly(alkylene glycol) moieties in the side chains (C) comprise poly(ethylene glycol) moieties.

6. Polymer according to claim 1, comprising a plurality of units of formula (B1) and a plurality of units of formula (C1),

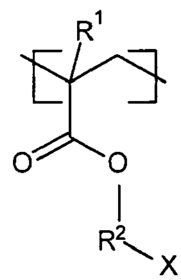

(B1)

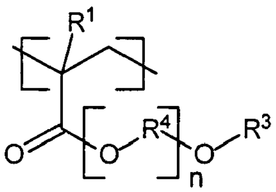

(C1)

wherein the variables $R^1$ to $R^4$, X and n have the following meanings independently for each occurrence in the polymer:

$R^1$ represents H or alkyl;

$R^2$ represents a hydrocarbon linking group having 1 to 20 carbon atoms which may contain one or more heteroatoms selected from O, S or N; X represents a cationic group;
$R^3$ represents H or a hydrocarbon group having 1 to 20 carbon atoms; $R^4$ represents alkylene; and n is an integer from 3 to 2000.

**7.** Polymer according to claim 6, wherein the variables $R^1$ to $R^4$, X and n have the following meanings independently for each occurrence in the polymer:

$R^1$ represents H or methyl;
$R^2$ represents alkylene; X represents a group $-N^+(R^5)(R^6)(R^7)$, with $R^5$ and $R^6$ being independently selected from hydrogen or alkyl, and $R^7$ being selected from hydrogen, alkyl, phenyl or benzyl, and two of the groups $R^5$ to $R^7$ may combine to form a 5 to 7-membered aromatic or non-aromatic heterocyclic ring together with the nitrogen atom to which they are attached;
$R^3$ represents alkyl; $R^4$ represents ethylene or propylene; and n is an integer from 5 to 100.

**8.** Polymer according to claim 7, wherein $R^5$ to $R^7$ represent H.

**9.** A solid substrate, fully or partially coated on at least one surface thereof with the polymer according to any of claims 1 to 8.

**10.** Substrate according to claim 9, wherein the coated surface is a glass surface.

**11.** Substrate according to claim 9 or 10, which is a microfluidic device or a bioanalytical chip.

**12.** Use of the polymer according to any of claims 1 to 8 for preventing the adsorption of biomolecules on surfaces.

**13.** Use according to claim 12, wherein the biomolecules are proteins.

**14.** Use of the polymer according to any of claims 1 to 8 for surface structuring in microfluidic devices.

**15.** Process for the preparation of a substrate providing a protein resistant surface, said process comprising the step of fully or partially coating at least one surface of the substrate with a polymer according to any of claims 1 to 8.

**16.** The process according to claim 15, wherein the coating is accomplished by contacting the surface with an aqueous solution of the polymer.

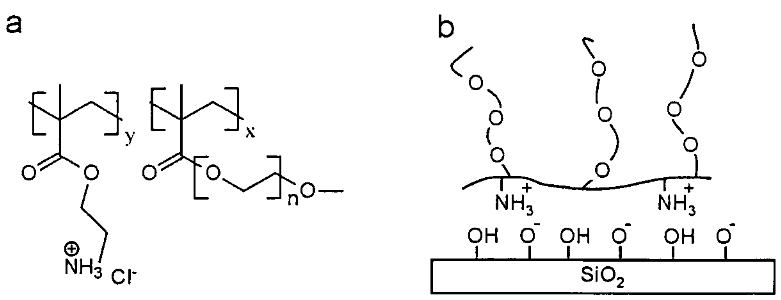

Fig. 1

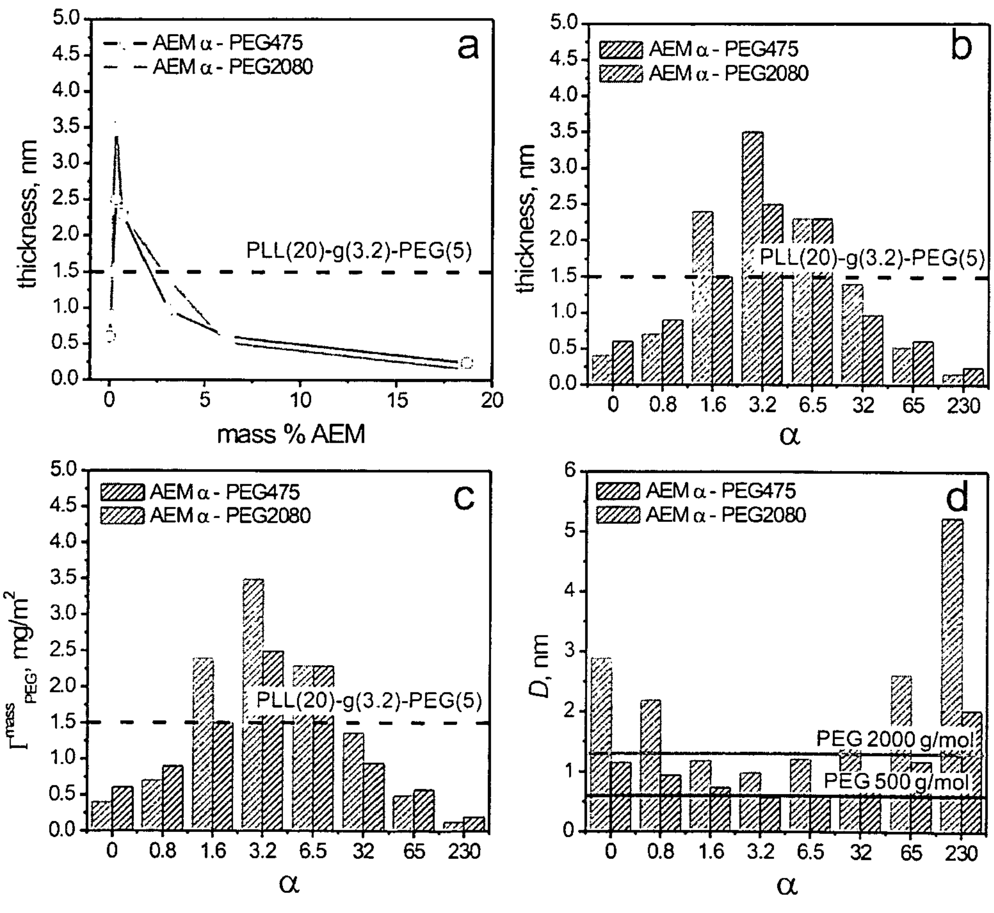
a
AEM α - PEG475
AEM α - PEG2080
PLL(20)-g(3.2)-PEG(5)
thickness, nm
mass % AEM
b
AEM α - PEG475
AEM α - PEG2080
PLL(20)-g(3.2)-PEG(5)
thickness, nm
α
c
AEM α - PEG475
AEM α - PEG2080
PLL(20)-g(3.2)-PEG(5)
$\Gamma^{mass}_{PEG}$, mg/m$^2$
α
d
AEM α - PEG475
AEM α - PEG2080
PEG 2000 g/mol
PEG 500 g/mol
D, nm
α

Fig. 2

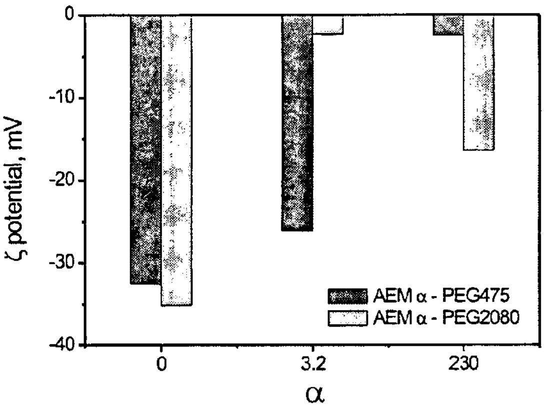
ζ potential, mV
0
-10
-20
-30
-40
0
3.2
230
α
AEM α - PEG475
AEM α - PEG2080

Fig. 3

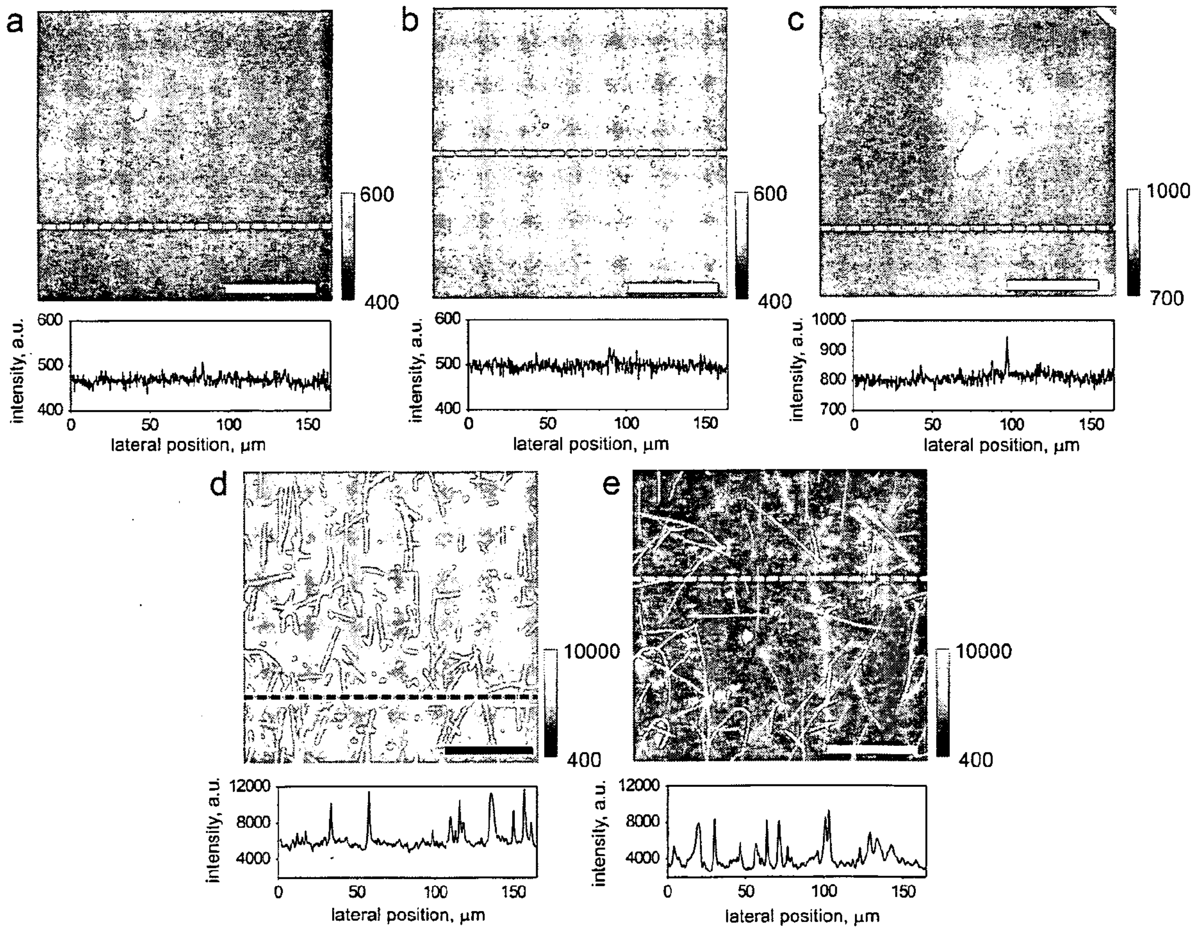
a
b
c
d
e
600
400
1000
700
10000
400
intensity, a.u.
lateral position, µm
0
50
100
150
12000
8000
4000

Fig. 4

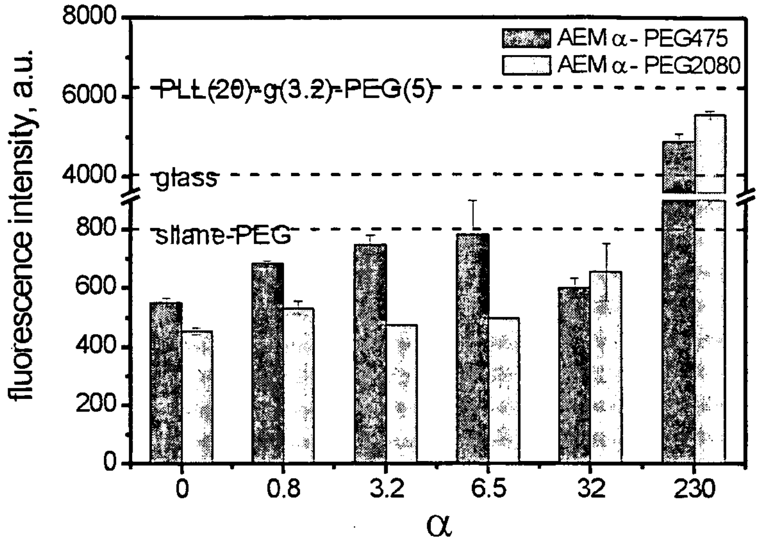

8000
6000
4000
800
600
400
200
0
fluorescence intensity, a.u.
AEM α - PEG475
AEM α - PEG2080
PLL(20)-g(3.2)-PEG(5)
glass
silane-PEG
0
0.8
3.2
6.5
32
230
α


Fig. 5

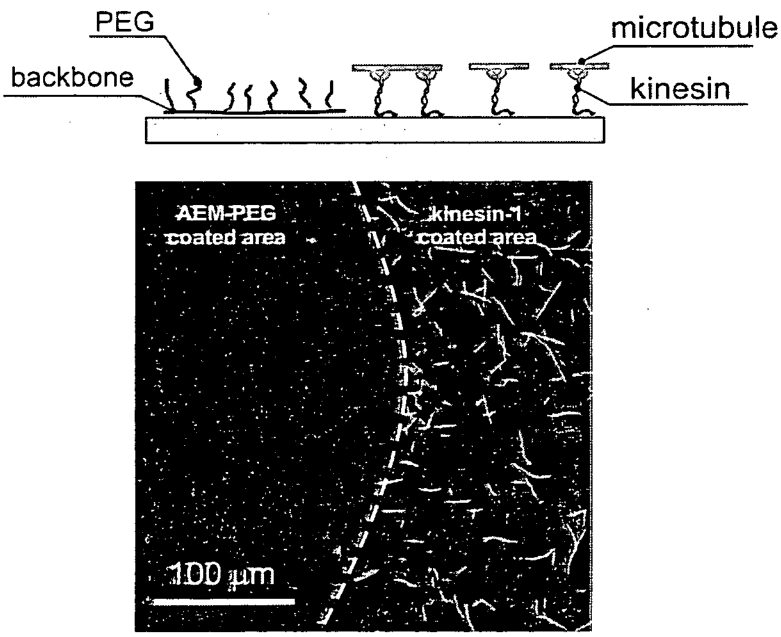

PEG
backbone
microtubule
kinesin
AEM-PEG coated area
kinesin-1 coated area
100 µm


Fig. 6

Europäisches Patentamt
European Patent Office
Office européen des brevets

# EUROPEAN SEARCH REPORT

Application Number
EP 09 01 1953

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 187 887 B1 (ALBRECHT GERHARD [DE] ET AL) 13 February 2001 (2001-02-13)<br>* column 1, lines 1-6 *<br>* column 7, lines 10-20 *<br>* example 1 *<br>* claim 1 *<br>----- | 1-7,9 | INV.<br>A61L31/10<br>B01J19/00<br>B01L3/00<br>C08F220/26<br>C08F220/34 |
| X | FR 2 872 514 A1 (OREAL [FR])<br>6 January 2006 (2006-01-06)<br>* examples 8,9,comparative example 6 *<br>----- | 1,3-7 | |
| A | RUPERT KONRADI, BIDHARI PIDHATIKA, ANDREAS MÜHLEBACH, MARCUS TEXTOR: "Poly-2-methyl-2-oxazoline: a peptide-like polymer for protein-repellent surfaces"<br>LANGMUIR,<br>vol. 24, no. 3,<br>19 November 2007 (2007-11-19), pages 613-616, XP002563893<br>* the whole document *<br>----- | 1-16 | |
| | | | TECHNICAL FIELDS SEARCHED (IPC) |
| | | | A61L<br>B01J<br>B01L<br>C08F |

1

The present search report has been drawn up for all claims

| Place of search | Date of completion of the search | Examiner |
|---|---|---|
| The Hague | 3 February 2010 | Bezard, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 01 1953

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2010

| Patent document cited in search report | Publication date | Patent family member(s) | Publication date |
|---|---|---|---|
| US 6187887 B1 | 13-02-2001 | AT 245666 T | 15-08-2003 |
| | | CA 2262068 A1 | 17-08-1999 |
| | | DE 19806482 A1 | 19-08-1999 |
| | | EP 0936228 A1 | 18-08-1999 |
| | | ES 2205612 T3 | 01-05-2004 |
| | | JP 4187859 B2 | 26-11-2008 |
| | | JP 11335426 A | 07-12-1999 |
| FR 2872514 A1 | 06-01-2006 | AT 432301 T | 15-06-2009 |
| | | EP 1765893 A2 | 28-03-2007 |
| | | EP 1769011 A2 | 04-04-2007 |
| | | ES 2326674 T3 | 16-10-2009 |
| | | WO 2006013268 A2 | 09-02-2006 |
| | | WO 2006013269 A2 | 09-02-2006 |
| | | JP 2008504426 T | 14-02-2008 |
| | | JP 2008505242 T | 21-02-2008 |
| | | US 2008292577 A1 | 27-11-2008 |
| | | US 2008014154 A1 | 17-01-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20080113352 A1
- US 20080199371 A1


### Non-patent literature cited in the description


- **Suh, K. Y. ; Seong, J. ; Khademhosseini, A. ; Laibinis, P.E. ; Langer, R.** *Biomaterials,* 2004, vol. 25 (3), 557-563
- **Sofia, S. J. ; Premnath, V. ; Merrill, E. W.** *Macromolecules,* 1998, vol. 31 (15), 5059-5070
- **Otsuka, H ; Nagasaki, Y. ; Kataoka K.** *Current Opinion in Colloid & Interface Science,* 2001, vol. 6 (1), 3-10
- **Du, H. ; Chandaroy, P. ; Hui, S. W.** *Biochimica Et Biophysica Acta-Biomembranes,* 1997, vol. 1326 (2), 236-248
- **Zhang, F. ; Kang, E. T. ; Neoh, K. G. ; Wang, P. ; Tan, K. L.** *Biomaterials,* 2001, vol. 22 (12), 1541-1548
- **Huang, N. P. ; Michel, R. ; Voros, J. ; Textor, M. ; Hofer, R. ; Rossi, A. ; Elbert, D. L. ; Hubbell, J. A. ; Spencer, N. D.** *Langmuir,* 2001, vol. 17 (2), 489-498
- **Ionov, L. ; Zdyrko, B. ; Sidorenko, A. ; Minko, S. ; Klep, V. ; Luzinov, I. ; Stamm, M.** *Macromolecular Rapid Communications,* 2004, vol. 25 (1), 360-365
- **Ionov, L. ; Sidorenko, A. ; Eichhorn, K. J. ; Stamm, M. ; Minko, S. ; Hinrichs, K.** *Langmuir,* 2005, vol. 21 (19), 8711-8716
- **Jacobasch, H.-J. ; Simon, F. ; Werner, C. ; Bellmann, C.** *Techn. Mess.,* 1996, vol. 63, 447
- **Bellmann, C. ; Synytska, A. ; Caspari, A. ; Drechsler, A. ; Grundke, K.** *Journal of Colloid and Interface Science,* 2007, vol. 309 (2), 225-230
- Handbuch der Elektrizität und des Magnetismus. Barth-Verlag, 1921, vol. II
- **Ionov, L. ; Stamm, M. ; Diez, S.** *Nano Letters,* 2005, vol. 5 (10), 1910-1914
- **Coy, D. L. ; Wagenbach, M. ; Howard, J.** *Journal of Biological Chemistry,* 1999, vol. 274 (6), 3667-3671
- **Ionov, L. ; Stamm, M. ; Diez, S.** *Nano Letters,* 2006, vol. 6 (9), 1982-1987
- **Howard, J.** *Nature,* 1997, vol. 389 (6651), 561-567
- **Katira, P. ; Agarwal, A. ; Fischer, T. ; Chen, H. Y. ; Jiang, X. ; Lahann, J. ; Hess, H.** *Advanced Materials,* 2007, vol. 19 (20), 3171